(19) **Europäisches Patentamt / European Patent Office / Office européen des brevets**

(11) **EP 3 926 508 A1**

(12) **EUROPEAN PATENT APPLICATION**
published in accordance with Art. 153(4) EPC

(43) Date of publication:
**22.12.2021 Bulletin 2021/51**

(21) Application number: **20908445.8**

(22) Date of filing: **07.05.2020**

(51) Int Cl.:
*G06F 30/20* [(2020.01)]    *B64G 7/00* [(2006.01)]
*G06F 119/10* [(2020.01)]

(86) International application number:
**PCT/CN2020/088918**

(87) International publication number:
**WO 2021/135023 (08.07.2021 Gazette 2021/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.12.2019 CN 201911404703**

(71) Applicant: **Beijing Institute Of Spacecraft Environment Engineering Beijing 100094 (CN)**

(72) Inventors:
• **XIANG, Shuhong**
  **Beijing 100094 (CN)**
• **YAN, Tingfei**
  **Beijing 100094 (CN)**
• **GAO, Haiyang**
  **Beijing 100094 (CN)**

• **FANG, Guiqian**
  **Beijing 100094 (CN)**
• **WANG, Haiming**
  **Beijing 100094 (CN)**
• **ZHANG, Jungang**
  **Beijing 100094 (CN)**
• **LI, Xinming**
  **Beijing 100094 (CN)**
• **HU, Yongqiang**
  **Beijing 100094 (CN)**
• **FENG, Zhenwei**
  **Beijing 100094 (CN)**
• **WANG, Dong**
  **Beijing 100094 (CN)**
• **JIA, Ruijin**
  **Beijing 100094 (CN)**
• **ZHANG, Jingchuan**
  **Beijing 100094 (CN)**

(74) Representative: **Deans, Michael John Percy Lane End House Hookley Lane Elstead Surrey GU8 6JE (GB)**

(54) **METHOD FOR TAILORING SATELLITE RANDOM VIBRATION AND NOISE TESTS ON THE BASIS OF AREA-TO-MASS RATIO**

(57) Disclosed is a method for tailoring satellite random vibration and noise tests on the basis of area-to-mass ratio, and the method is used to tailor a random vibration test and a noise test in a ground verification test for satellites. The method comprises: first, performing satellite dynamics frequency response simulation analysis according to the random vibration test conditions of the satellite, and obtaining the power spectral density value of the random vibration test condition which corresponds to the corresponding frequency of the maximum frequency response at the key positions of the satellite; then, according to the acoustic test conditions of the satellite, performing simulation analysis of aerospace acoustic vibration response, obtaining the sound pressure level under the acoustic test conditions which corresponds to the corresponding frequency band of the maximum frequency response at the key positions of the satellite, and calculating the frequency bandwidth and sound pressure spectrum density; then calculating the area-to-mass ratio based on Miles Equation; and finally, calculating a break-even coefficient and a break-even point, and tailoring the random vibration test and noisy test according to the break-even point. In this method the contribution of the modal at each stage of the satellite to the vibration is fully considered and the tailoring threshold is quantified according to the dynamic characteristics of different types of satellites, such that the method has the characteristic of strong adaptability.

EP 3 926 508 A1

FIG. 1

```
┌─────────────────────────────┐         ┌─────────────────────────────┐
│ Random vibration test       │         │ Acoustic  test  conditions  of │
│ conditions of satellites    │         │ satellites                  │
└─────────────────────────────┘         └─────────────────────────────┘
              │                                        │
              ▼                                        ▼
┌─────────────────────────────┐         ┌─────────────────────────────┐
│ Simulation analysis of      │         │ Simulation  analysis  of  the │
│ random vibration of the     │         │ acoustic vibration response of │
│ satellite                   │         │ the satellite               │
└─────────────────────────────┘         └─────────────────────────────┘
              │                                        │
              ▼                                        ▼
┌─────────────────────────────┐         ┌─────────────────────────────┐
│ Obtain the power spectral   │         │ Obtain the sound pressure level │
│ density $PSD_{fn}$ of the   │         │ $spl$ of  the  acoustic  test │
│ conditions of the random    │         │ conditions which corresponds │
│ vibration test which        │         │ to the corresponding frequency │
│ corresponds to the          │         │ band  of  the  maximum       │
│ corresponding frequency of  │         │ frequency response at the key │
│ the maximum frequency       │         │ positions of the satellite  │
│ response at the key         │         └─────────────────────────────┘
│ positions of the satellite  │                        │
└─────────────────────────────┘                        ▼
              │                          ┌─────────────────────────────┐
              │                          │ Calculate the value of $\Delta f$ │
              │                          └─────────────────────────────┘
              │                                        │
              │                                        ▼
              │                          ┌─────────────────────────────┐
              │                          │ Calculate the value of Ps   │
              │                          └─────────────────────────────┘
              │                                        │
              └──────────────┐           ┌─────────────┘
                             ▼           ▼
                    ┌─────────────────────────────┐
                    │ Calculate the               │
                    │ area-to-mass ratio          │
                    │ based on Miles              │
                    └─────────────────────────────┘
```

┌─────────────────────────────┐     ┌─────────────────────────────┐     ┌─────────────────────────────┐
│ Calculate the value of $\beta_a$ │     │ Calculate the corrected     │     │ Calculate the value of $\beta_r$ │
└─────────────────────────────┘     │ area-to-mass ratio          │     └─────────────────────────────┘
                                    └─────────────────────────────┘
                                                 │
                                                 ▼
                                    ┌─────────────────────────────┐
                                    │ Tailor the random vibration │
                                    │ test and acoustic test      │
                                    └─────────────────────────────┘

**Description**

FIELD OF THE INVENTION

This disclosure relates to satellites' mechanical environment test. More particularly, we disclose a method for tailoring satellite random vibration and noise tests.

DESCRIPTION OF THE PRIOR ART

The tailoring of random vibration test and acoustic test plays an important role in satellites' mechanical environment test. The related principles of tailoring are stipulated in the standards of various countries, but the national standards of how to select the principles are not consistent. It is necessary to make in-depth research and develop the tailoring criterion for random vibration and acoustic tests.

At present, the relevant domestic and international test standards only provided the general principles qualitatively, but no quantitative analysis and selection methods were presented. In NASA-STD-7001, generally, the random vibration test at the system level should be adopted for compact satellites weighing less than 450 kg. For some satellites that are small in weight but the analysis or empirical data show that their working load is caused by acoustic environment, the acoustic test should be adopted. For the parts with large area-to-mass ratio, such as solar wings, the acoustic test should be adopted. In SMC-S-016, the standard is when the mass of an aircraft is less than 180kg, the vibration test can replace the acoustic test in order to excite the vibration of the aircraft more effectively. In both standards, only the influence of the mass on the tailoring of the random vibration test / acoustic test is considered. As for the influence of the area-to-mass ratio on the test tailoring, only a rough qualitative analysis is given, but no quantitative analysis is provided.

In ECSS-26A, the following standard is given for the influence of the mass on the tailoring of the random vibration test / acoustic test: in most cases, the acoustic test is carried out for satellites. The random vibration test must be carried out only for micro satellites (150kg-200kg).

The tailoring principles of the acoustic test and random vibration test are given in ISO19683 as following: for small and compact satellites, the interface vibration is more severe than that caused by passing through the sound field, so random vibration test is required rather than acoustic test. It provides the calculation based on the single-degree-of-freedom system and the first-order resonance frequency as well as a quantitative formula of tailoring based on area-to-mass ratio, and the conclusion is that the acoustic test is more effective when the rea/mass ratio is greater than 0.083 m2 / kg. On the contrary, the random test is more effective.

For the major satellite developers and manufacturers in China, namely China Aerospacesat Co. Ltd and Shanghai Microsat Research Institute of Chinese Academy of Sciences etc, GJB1027A is the principal reference for related tests. At present, most of the small satellites have carried out random vibration test verification, only a few have carried out acoustic test verification, and there is no unified conclusion on the tailoring of the verification methods of small satellites' random vibration test. Compared with the foreign standards, GJB1027A mainly refers to NASA-STD-7001 and the related provisions are basically consistent with NASA-STD-7001. In general, presently, there is a lack of precise mechanical model for the influence of area-to-mass ratio and other dimensions on the tailoring of the random vibration / acoustic test. There is also a lack of specific tailoring indicators of related parameters for the tailoring of the random vibration/ acoustic test.

**SUMMARY OF THE INVENTION**

The technical solution of the invention is to quantify the tailoring basis of satellites' random vibration test and acoustic test. In this method, the contribution of the modal at each stage of the satellite to the vibration is fully considered, such that the method has better applicability.

In order to achieve the above purpose, this invention adopts the following technical solutions.

A method for tailoring satellite random vibration and noise tests on the basis of area-to-mass ratio, comprising the following steps.

(1) According to the random vibration test conditions of the satellite, the simulation analysis of the dynamic frequency response of the satellite is carried out, and the power spectral density $PSD_{fn}$ of the conditions of the random vibration test which corresponds to the corresponding frequency of the maximum frequency response at the key positions of the satellite is obtained;

(2) According to the acoustic test conditions of the satellite, the simulation analysis of the aerospace acoustic vibration response is carried out, and the sound pressure level $spl$ of the acoustic test conditions which corresponds to the corresponding frequency band of the maximum frequency response at the key positions of the satellite is obtained;

(3) According to the center frequency $f_c$, calculate the frequency bandwidths $\Delta f$. For octave spectrum, $\Delta f = 0.707f_c$. For 1/3 octave spectrum, $\Delta f = 0.2321f_c$;

(4) According to steps (2) and (3), calculate the sound pressure spectral density, wherein $P_{ref}$ is the reference sound pressure $2\times10^{-5}Pa$;

(5) According to steps (1) and (4), calculate the area-to-mass ratio based on Miles Equation (

$$\left(\frac{S}{M}\right)_{miles} = \sqrt{\frac{\Delta f \cdot PSD_{fn}}{P_S}}$$ ;

(6) Calculate the "break-even" coefficient $X_e = \dfrac{\beta_r}{\beta_a}$ , wherein $\beta_a = \sum_{i=1}^{m} \sqrt{\dfrac{W_{A-\max}(f_c)_i}{Q^2 \cdot (\frac{A}{M})^2 \cdot P_s}}$ , $i = 1,2,...,m$, wherein $W_{A-max}(f_c)_i$ is the response value at the key point "i" measured in the simulation analysis of the acoustic test or acoustic test for satellites of similar structures, Q is the Quality Factor, $\dfrac{A}{M}$ is the actual area-to-mass ratio of the satellite; $\beta_r = \dfrac{1}{m}\sum_{i=1}^{m}\sqrt{\dfrac{W_{r-\max}(f_n)_i}{Q^2 \cdot PSD(f_n)_i}}$ , $i = 1,2,...,m$, wherein $W_{r-max}(f_n)_i$ is the response value at the key point "i" measured in the simulation analysis of the random test or random vibration test for satellites of similar structures;

(7) According to steps (5) and (6), calculate the break-even point $\left(\dfrac{S}{M}\right)_{break} = X_e \cdot \left(\dfrac{S}{M}\right)_{miles}$ ;

(8) According to the break-even point, tailor the random vibration test and acoustic test for satellites. Wherein, while $\left(\dfrac{A}{M}\right) > \left(\dfrac{S}{M}\right)_{break}$ , the acoustic test is more suitable for the ground verification of the satellite; while $\left(\dfrac{A}{M}\right) < \left(\dfrac{S}{M}\right)_{break}$ , the random vibration test is more effective for satellite excitation.

In said step (3), calculate the bandwidth formula according to different octaves of the acoustic test spectrum.

In said step (6), the Quality Factor Q is 4.5; $\beta_r$ and $\beta_a$ are the arithmetic means selected at the key measure point "m", and the minimum value of "m" is 1; $W_{A-max}(f_c)_i$ and $W_{r-max}(f_n)_i$ are the respective response values at the key point "i" measured in the simulation analysis of the acoustic test and random vibration test or acoustic test and random vibration test for satellites of similar structures.

Using this method, the tailoring of satellites' random vibration test and acoustic test is successfully completed. Compared with the prior art, it has the following advantages.

(1) The selection of random vibration test and noise test for satellites is controversial in China, and currently there is no theoretical foundation. This disclosure proposes a tailoring method for complex satellites' ground-based simulation of random vibration and noise test. Compared with the internationally accepted ECSS-26A and ISO19683, the algorithms proposed in this invention are more advanced and the calculation results are more accurate.

(2) A calculation coefficient of the "break-even" area-to-mass ratio is proposed in this invention. The correction calculation can be carried out by utilizing the source data of the acoustic test and random vibration test as well as the measured data of the acoustic test of satellites with similar structures or the simulation analysis results. Such coefficient is more comprehensive than a single factor due to the fact that the configuration, area, mass and damping of the product are all taken into consideration.

(3) The application range of the "break-even" in the tailoring of satellites' random vibration and noise tests is proposed in the method of this invention, and this will improve the practicability of the method in project use. In the practice of the satellite development, this method can effectively guide the tailoring of satellites' mechanical test, improve the development efficiency and reduce the test cost.

**BRIEF DESCRIPTION OF THE DRAWING**

Reference will now be made to the accompanying drawing, by way of example only, in which:

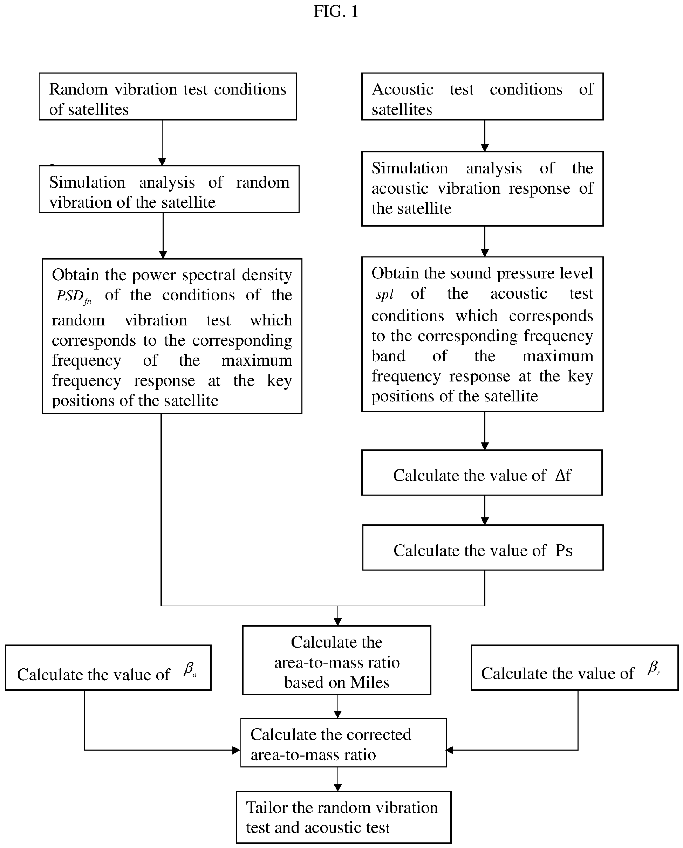

Fig. 1 shows the implementation flow chart of the method for tailoring satellite random vibration and noise tests on the basis of area-to-mass ratio in this invention.

**DESCRIPTION OF PREFERRED EMBODIMENTS**

The following is a practical embodiment of the invention. The content of this invention is further explained by the embodiments. The description of the following embodiments is of course only an example of different aspects of this invention and should not be understood as limiting the scope of the disclosure.

Referring to Fig. 1, Fig. 1 shows the implementation flow chart of the method for tailoring satellite random vibration and noise tests on the basis of area-to-mass ratio in this invention, comprising the following steps: (1) according to the random vibration test conditions of the satellite, the simulation analysis of the dynamic frequency response of the satellite is carried out, and the power spectral density of the conditions of the random vibration test which corresponds to the corresponding frequency of the maximum frequency response at the key positions of the satellite is obtained; (2) according to the acoustic test conditions of the satellite, the simulation analysis of the acoustic vibration response is carried out, and the sound pressure level of the acoustic test conditions which corresponds to the corresponding frequency band of the maximum frequency response at the key positions of the satellite is obtained; (3) calculate the frequency bandwidths; (4) calculate the sound pressure spectral density; (5) calculate the area-to-mass ratio based on Miles Equation; (6) calculate the break-even coefficient, (7) calculate the break-even point; (8) tailor the random vibration test and noise test for satellites according to the break-even point.

Taking the tailoring of the mechanical environment test in a satellite development project as an example, the random vibration test conditions and noise test conditions are shown in Table 1 and table 2.

Table 1 Random Vibration Test Conditions

| Frequency (Hz) | 20-150 | 150-800 | 800-2000 |
|---|---|---|---|
| PSD | +3dB/Oct | 0.031g²/Hz | -6dB/Oct |

Table 2 Noise Test Conditions

| Octave center frequency $f_c$ (Hz) | 31.5 | 63 | 125 | 250 | 500 | 1000 | 2000 | 4000 | 8000 |
|---|---|---|---|---|---|---|---|---|---|
| Sound pressure level (dB) | 116 | 122 | 130 | 134 | 136 | 133 | 125 | 121 | 114 |

The following are detailed descriptions of each step.

(1) The simulation analysis of a finite element model of the satellites is carried out according to the random vibration test conditions in Table 1 and noise test conditions in Table 2. Taking as an example, if the maximum frequency response at the key positions in the finite element model of the satellite corresponds to the frequency of 250Hz, the spectral density value of the conditional spectrum of the random vibration test from 150Hz to 800Hz is 0.031g²/Hz, i.e. 2.98 (m/s²)²/Hz;

(2) The octave sound pressure level of the satellite's noise test condition corresponding to 250Hz is 134dB;

(3) Calculate the octave frequency bandwidth, $\Delta f = 0.707 f_c = 0.707 \times 250\text{Hz} = 176.75\text{Hz}$ ;

(4) Utilizing the sound pressure level and frequency bandwidth obtained in steps (2) and (3), calculate the sound pressure spectrum density $P_s = P_{ref}^2 \cdot 10^{spl/10} / \Delta f = \left(2\times10^{-5}\right)^2 \times 10^{134/10} = 4\times10^{3.4}$ ;

[ (5) Calculate the area-to-mass ratio based on Miles Equation,

$$\left(\frac{S}{M}\right)_{miles} = \sqrt{\frac{\Delta f \cdot PSD_{fn}}{P_S}} = \sqrt{\frac{176.75\times2.98}{4\times10^{3.4}}} = 0.2288$$ ;

(6) Calculate the break-even coefficient. For the first measure point:

$$\beta_{a-1} = \sqrt{\frac{W_{A-max}(f)}{Q^2\left(\frac{A}{M}\right)^2 P_s}} = \sqrt{\frac{1.0187}{4.5^2 \times 0.018^2 \times 28.42}} = 2.337$$

$$\beta_{r-1} = \sqrt{\frac{W_{r-max}(f)}{Q^2 PSD_{input}(f)}} = \sqrt{\frac{0.101}{4.5^2 \times 0.031}} = 0.401$$

Select five key measure points, i.e. m=5. The coefficients corresponding to the five measure points are calculated according to the above formula. The calculation results of the break-even coefficient are shown in Table 3 and table 4.

Table 3 Calculation results of βa at key position

| Measure point | Q | $f_n$ | $f_c$ | spl | $P_S$ | $W_A$-max | $\frac{A}{M}$ | βa -i |
|---|---|---|---|---|---|---|---|---|
| 1 | 4.5 | 272 | 250 | 134 | 28.42 | 1.0187 | 0.018 | 2.337 |
| 2 | 4.5 | 272 | 250 | 134 | 28.42 | 0.4893 | 0.018 | 1.620 |
| 3 | 4.5 | 204 | 250 | 134 | 28.42 | 0.3526 | 0.018 | 1.375 |
| 4 | 4.5 | 212 | 250 | 134 | 28.42 | 0.4364 | 0.018 | 1.538 |
| 5 | 4.5 | 632 | 500 | 136 | 22.52 | 4.2798 | 0.018 | 5.381 |
| βa | | | | | | | | 2.658 |

Table 4 Calculation results of βr at key position

| Measure point | Q | $PSD_{input}$ | $W_r$-max | βr-i |
|---|---|---|---|---|
| 1 | 4.5 | 0.031 | 0.101 | 0.401 |
| 2 | 4.5 | 0.031 | 0.0337 | 0.232 |
| 3 | 4.5 | 0.031 | 0.0979 | 0.395 |
| 4 | 4.5 | 0.031 | 0.1596 | 0.504 |
| 5 | 4.5 | 0.031 | 0.1447 | 0.480 |
| βr | | | | 0.402 |

(7) Calculate the break-even point.

$$\left[\frac{s}{m}\right]_{break} = \frac{0.402}{2.658} \times \sqrt{\frac{0.707 \times 250 \times 2.98}{4 \times 10^{3.4}}} = 0.0346 m^2/kg$$

(8) Tailor the satellite random vibration test or noise test according to the break-even point. The actual area-to-mass ratio of the satellite is 0.018, which is less than 0.0346. That is to say, using the random vibration test for authentification is more suitable for tailoring the noise test.

The contents not described in detail in the description of this invention are commonly known to those skilled in the art.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

**Claims**

1. A method for tailoring satellite random vibration and noise tests on the basis of area-to-mass ratio, comprising the following steps:

(1) according to the random vibration test conditions of the satellite, the simulation analysis of the dynamic frequency response of the satellite is carried out and the power spectral density $PSD_{fn}$ of the conditions of the random vibration test which corresponds to the corresponding frequency of the maximum frequency response at the key positions of the satellite is obtained;

(2) according to the acoustic test conditions of the satellite, the simulation analysis of the acoustic vibration response is carried out and the sound pressure level $spl$ of the acoustic test conditions which corresponds to the corresponding frequency band of the maximum frequency response at the key positions of the satellite is obtained;

(3) according to the center frequency $f_c$, calculate the frequency bandwidths $\Delta f$. For octave spectrum, $\Delta f=0.707f_c$. For 1/3 octave spectrum, $\Delta f=0.232f_c$;

(4) according to steps (2) and (3), calculate the sound pressure spectral density, wherein $P_{ref}$ is the reference sound pressure $2\times10^{-5}Pa$;

(5) according to steps (1) and (4), calculate the area-to-mass ratio based on Miles Equation

$$\left(\frac{S}{M}\right)_{miles} = \sqrt{\frac{\Delta f \cdot PSD_{fn}}{P_S}} \;;$$

(6) calculate the "break-even" correction coefficient $X_e = \dfrac{\beta_r}{\beta_a}$ ; wherein $\beta_a = \sum_{i=1}^{m} \sqrt{\dfrac{W_{A-\max}(f_c)_i}{Q^2 \cdot (\frac{A}{M})^2 \cdot P_s}}$ , $i=1,2,...,m$, wherein $W_{A\text{-}max}(f_c)_i$ is the response value at the key point "i" measured in the simulation analysis of the acoustic test or acoustic test for satellites of similar structures, Q is the quality factor, $\dfrac{A}{M}$ is the actual area-to-mass ratio of the satellite; $\beta_r = \dfrac{1}{m}\sum_{i=1}^{m}\sqrt{\dfrac{W_{r-\max}(f_n)_i}{Q^2 \cdot PSD(f_n)_i}}$ , $i=1,2,...,m,$ wherein $W_{r\text{-}max}(f_n)_i$ is the response value at the key point "i" measured in the simulation analysis of the random vibration test or random vibration test for satellites of similar structures;

(7) according to steps (5) and (6), calculate the break-even point $\left(\dfrac{S}{M}\right)_{break} = X_e \cdot \left(\dfrac{S}{M}\right)_{miles}$ ;

(8) According to the break-even point, tailor the random vibration test and acoustic test for satellites.

2. A method for tailoring satellite random vibration and noise tests according to Claim 1, comprising: in said step (8), while $\left(\dfrac{A}{M}\right) > \left(\dfrac{S}{M}\right)_{break}$ , the acoustic test is more suitable for the ground verification of the satellite; while $\left(\dfrac{A}{M}\right) < \left(\dfrac{S}{M}\right)_{break}$ , the random vibration test is more effective for satellite excitation.

3. A method for tailoring satellite random vibration and noise tests according to Claim 1, comprising: in said step (3), calculate the bandwidth formula according to different octaves of the acoustic test spectrum.

4. A method for tailoring satellite random vibration and noise tests according to Claim 1, comprising: in said step (6), the Quality Factor Q is 4.5.

5. A method for tailoring satellite random vibration and noise tests according to Claim 1, comprising: in said step (6), $\beta_r$ and $\beta_a$ are the arithmetic means selected at the key measure point "m", and the minimum value of "m" is 1.

6. A method for tailoring satellite random vibration and noise tests according to Claim 1, comprising: in said step (6), $W_{A\text{-}max}(f_c)_i$ and $W_{r\text{-}max}(f_n)_i$ are the respective response values at the key point "i" .

FIG. 1

```
┌─────────────────────────────┐        ┌─────────────────────────────┐
│ Random vibration test       │        │ Acoustic  test  conditions  of │
│ conditions of satellites    │        │ satellites                  │
└─────────────────────────────┘        └─────────────────────────────┘
              │                                        │
              ▼                                        ▼
┌─────────────────────────────┐        ┌─────────────────────────────┐
│ Simulation analysis of      │        │ Simulation  analysis  of  the │
│ random vibration of the     │        │ acoustic vibration response of │
│ satellite                   │        │ the satellite               │
└─────────────────────────────┘        └─────────────────────────────┘
              │                                        │
              ▼                                        ▼
┌─────────────────────────────┐        ┌─────────────────────────────┐
│ Obtain the power spectral   │        │ Obtain the sound pressure level │
│ density $PSD_{fn}$ of the   │        │ $spl$  of  the  acoustic  test │
│ conditions of the random    │        │ conditions which corresponds │
│ vibration test which        │        │ to the corresponding frequency │
│ corresponds to the          │        │ band  of  the  maximum      │
│ corresponding frequency of  │        │ frequency response at the key │
│ the maximum frequency       │        │ positions of the satellite  │
│ response at the key         │        └─────────────────────────────┘
│ positions of the satellite  │                       │
└─────────────────────────────┘                       ▼
              │                         ┌─────────────────────────────┐
              │                         │ Calculate the value of $\Delta f$ │
              │                         └─────────────────────────────┘
              │                                        │
              │                                        ▼
              │                         ┌─────────────────────────────┐
              │                         │ Calculate the value of Ps   │
              │                         └─────────────────────────────┘
              │                                        │
              │         ┌──────────────────────┐      │
              └────────▶│ Calculate the        │◀─────┘
                        │ area-to-mass ratio   │
                        │ based on Miles       │
                        └──────────────────────┘
┌──────────────────────┐          │          ┌──────────────────────┐
│ Calculate the value  │          │          │ Calculate the value  │
│ of $\beta_a$         │          │          │ of $\beta_r$         │
└──────────────────────┘          │          └──────────────────────┘
          │                       ▼                       │
          │         ┌──────────────────────┐              │
          └────────▶│ Calculate the corrected │◀──────────┘
                    │ area-to-mass ratio   │
                    └──────────────────────┘
                               │
                               ▼
                    ┌──────────────────────┐
                    │ Tailor the random    │
                    │ vibration test and   │
                    │ acoustic test        │
                    └──────────────────────┘
```

## INTERNATIONAL SEARCH REPORT

| International application No. |
|---|
| **PCT/CN2020/088918** |

**A. CLASSIFICATION OF SUBJECT MATTER**

G06F 30/20(2020.01)i; B64G 7/00(2006.01)i; G06F 119/10(2020.01)i

According to International Patent Classification (IPC) or to both national classification and IPC

**B. FIELDS SEARCHED**

Minimum documentation searched (classification system followed by classification symbols)

G06F B64G

Documentation searched other than minimum documentation to the extent that such documents are included in the fields searched

Electronic data base consulted during the international search (name of data base and, where practicable, search terms used)

CNABS; CNTXT; CNKI; SIPOABS; DWPI; USTXT; WOTXT; EPTXT; IEEE: 面质比, 面积质量比, 随机振动, 噪声, 卫星, 航天器, 剪裁, 响应值, 功率谱密度, 声压, 声谱, 品质, area mass ratio, random vibration test, acoustic test, satellite, spacecraft, tailor, response value, power spectrum density, sound pressure, acoustic spectrum, quality

**C. DOCUMENTS CONSIDERED TO BE RELEVANT**

| Category* | Citation of document, with indication, where appropriate, of the relevant passages | Relevant to claim No. |
|---|---|---|
| A | 李春丽 等 (LI, Chunli et al.). "随机振动试验和噪声试验的有效性分析 (Spacecraft Vibration Test Optimization in System and Component Level)" 航天器环境工程 (Spacecraft Environment Engineering). Vol. 24, No. 3, 30 June 2007 (2007-06-30), ISSN: 1673-1379, pp. 187-189 | 1-6 |
| A | CN 110375939 A (CHINA SPACESAT CO., LTD.) 25 October 2019 (2019-10-25) entire document | 1-6 |
| A | CN 104463355 A (CHINA SPACESAT CO., LTD.) 25 March 2015 (2015-03-25) entire document | 1-6 |
| A | US 6810741 B1 (QUEBEC CENTRE RECH IND.) 02 November 2004 (2004-11-02) entire document | 1-6 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 August 2020** | **27 September 2020** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/088918**

| Patent document cited in search report | | | Publication date (day/month/year) | Patent family member(s) | | | Publication date (day/month/year) |
|---|---|---|---|---|---|---|---|
| CN | 110375939 | A | 25 October 2019 | None | | | |
| CN | 104463355 | A | 25 March 2015 | CN | 104463355 | B | 29 September 2017 |
| US | 6810741 | B1 | 02 November 2004 | CA | 2427213 | A1 | 30 October 2004 |
| | | | | US | 2004216524 | A1 | 04 November 2004 |
| | | | | CA | 2427213 | C | 23 September 2008 |

Form PCT/ISA/210 (patent family annex) (January 2015)